# EUROPEAN PATENT APPLICATION

(11) **EP 3 145 258 A1**
(43) Date of publication of application: **22.03.2017**
(21) Application number: 16191537.6
(22) Date of filing: 05.08.2014
(51) Int. Cl.: H04W 64/00, H04W 88/18, H04W 48/08, H04W 48/20, G01S 5/02, G01S 5/14

(54) **ACCESS POINTS AND METHODS FOR ACCESS POINT SELECTION USING AN INFORMATION DATA STRUCTURE**

(30) Priority: 06.08.2013 US 201361862686 P; 18.12.2013 US 201314132374
(62) Divisional of application: 14835017.6
(71) Applicant: INTEL Corporation, Santa Clara, CA 95054 (US)
(72) Inventor: PRECHNER, Gaby, 7531301 Rishon Lezion (IL); YAKHNICH, Evgeny, Hadera (IL)
(74) Representative: Clarke, Jeffrey David

(57) **Abstract**

Methods and systems are presented which provide selection techniques for network equipment to communication stations with access point information that may be utilized to select network equipment for determining a location of the communication station. Techniques are disclosed involving location determination information in wireless networks. Such techniques may involve time of flight distance measurement protocols, signal strength measurement techniques and wireless communication networks. The networks may include IEEE 802.11 networks. In some embodiments, a device or communication station may receive a list of access point entries including data structures that have logical links corresponding to neighboring access points, the list being usable by the device to select an access point in a constant O(1) time. The data structure many include an address access point identifier, the geographic coordinates of the access point, a height above a floor value, unit types, and the error values.

## Description

### CLAIM OF PRIORITY

This patent application claims the benefit of priority to U.S. Patent Application Serial No. 14/132,374, filed on December 18, 2013, which claims the benefit of priority to U.S. Provisional Patent Application Serial No. 61/862,686, filed on August 6, 2013, each of which is hereby incorporated by reference herein in its entirety.

### TECHNICAL FIELD

Embodiments pertain to wireless communications. Some embodiments relate to indoor navigation. Some embodiments relate to systems and methods to select access points for performing time-of-flight location techniques.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 is an illustration of an example configuration of a communication network architecture, in accordance with some embodiments;
FIG. 2 is a block diagram of an example wireless communication system, in accordance with some embodiments;
FIG. 3 depicts an example illustration of an access point hierarchy, in accordance with some embodiments;
FIG. 4 depicts an example of a access point data structure, in accordance with some embodiments;
FIG. 5 is a flowchart illustrating an example access point selection algorithm, in accordance with some embodiments;
FIG. 6 illustrates a functional block diagram of a mobile device in accordance with some embodiments;
FIG. 7 is a block diagram illustrating a mobile device in accordance with some embodiments; and
FIG. 8 illustrates a block diagram of an example machine upon which any one or more of the techniques (e.g., methodologies) discussed herein may be performed.

### DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Outdoor navigation is widely deployed through the development of various global navigation satellite systems (GNSS) such as GPS, GLONASS and GALILEO. However, the field of indoor navigation is still developing. This field differs from the outdoor navigation because indoor environment typically prevent the reception of signals from GNSS satellites or degrade their level beyond usable levels. As a result, there is a need to provide an indoor navigation solution with satisfactory precision.

The time-of-flight (ToF) method of location may be defined as the overall time a signal propagates from a device to an access point (AP) and back to the device. This value can be converted into a distance value by dividing the time by two and multiplying that result by the speed of light. ToF calculations typically rely on the device knowing the basic parameters and location of one or more access points.

The radio strength signal indication (RSSI) method of location may be defined as determining a distance between a device and an AP based on signal strength received by the device from the AP or vice-versa. This value can be converted into a distance value by calculating a signal loss based on a known, expected, or exchanged signal strength. RSSI calculations typically rely on the device knowing the basic transmitter parameters and location of one or more access points.

Venues such as shopping malls, stadium, etc. may have hundreds, or more, APs. The device typically locates the proper APs to perform the measurements utilizing selection criteria such as the AP location or signal strength. Performing the ToF or RSSI algorithms for selecting APs can reach high computational complexity on the order of N-squared, which will typically consume device power in an inefficient manner, and creates additional latency for the overall location computation time.

Example embodiments discussed herein include an approach for representing an AP database that will enable a device to significantly reduce the computation complexity of the AP selection algorithm. In an example, the computation complexity is reduced, in the worst case, to O(N).

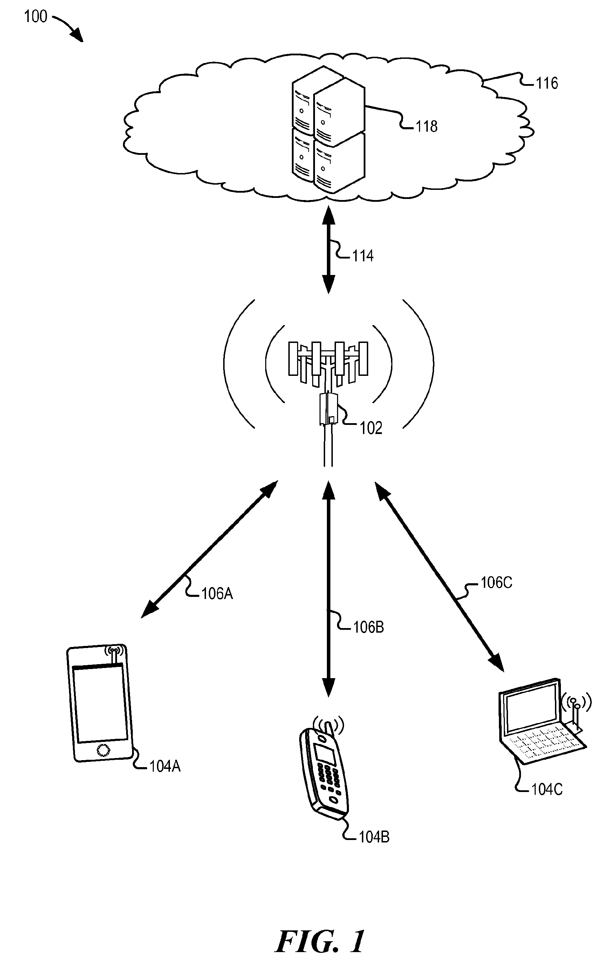

FIG. 1 is an illustration of an example configuration of a communication network architecture 100, in accordance with some embodiments. Within the communication network architecture 100, a carrier-based network such as an IEEE 802.11 compatible wireless access point or a LTE/LTE-A cell network operating according to a standard from a 3GPP standards family is established by network equipment 102. The network equipment 102 may include a wireless access point, a Wi-Fi hotspot, or an enhanced or evolved node B (eNodeB) communicating with communication devices 104A, 104B, 104C (e.g., a user equipment (UE) or a communication station (STA)). The carrier-based network includes wireless network connections 106A, 106B, and 106C with the communication devices 104A, 104B, and 104C, respectively. The communication devices 104A, 104B, 104C are illustrated as conforming to a variety of form factors, including a smartphone, a mobile phone handset, and a personal computer having an integrated or external wireless network communication device.

The network equipment 102 is illustrated in FIG. 1 as being connected via a network connection 114 to network servers 118 in a cloud network 116. The servers 118, or any one individual server, may operate to provide various types of information to, or receive information from, communication devices 104A, 104B, 104C, including device location, user profiles, user information, web sites, e-mail, and the like. The techniques described herein enable the determination of the location of the various communication devices 104A, 104B, 104C, with respect to the network equipment 102.

Communication devices 104A, 104B, 104C may communicate with the network equipment 102 when in range or otherwise in proximity for wireless communications. As illustrated, the connection 106A may be established between the mobile device 104A (e.g., a smartphone) and the network equipment 102; the connection 106B may be established between the mobile device 104B (e.g., a mobile phone) and the network equipment 102; and the connection 106C may be established between the mobile device 104C (e.g., a personal computer) and the network equipment 102.

The wireless communications 106A, 106B, 106C between devices 104A, 104B, 104C may utilize a Wi-Fi or IEEE 802.11 standard protocol, or a protocol such as the current 3rd Generation Partnership Project (3GPP) long term evolution (LTE) time division duplex (TDD)-Advanced systems. In an embodiment, the communications network 116 and network equipment 102 comprises an evolved universal terrestrial radio access network (EUTRAN) using the 3rd Generation Partnership Project (3GPP) long term evolution (LTE) standard and operating in time division duplexing (TDD) mode. The devices 104A, 104B, 104C may include one or more antennas, receivers, transmitters, or transceivers that are configured to utilize a Wi-Fi or IEEE 802.11 standard protocol, or a protocol such as 3GPP, LTE, or TDD-Advanced or any combination of these or other communications standards.

Antennas in or on devices 104A, 104B, 104C may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, antennas may be effectively separated to utilize spatial diversity and the different channel characteristics that may result between each of the antennas and the antennas of a transmitting station. In some MIMO embodiments, antennas may be separated by up to 1/10 of a wavelength or more.

In some embodiments, the mobile device 104A may include one or more of a keyboard, a display, a non-volatile memory port, multiple antennas, a graphics processor, an application processor, speakers, and other mobile device elements. The display may be an LCD screen including a touch screen. The mobile device 104B may be similar to mobile device 104A, but does not need to be identical. The mobile device 104C may include some or all of the features, components, or functionality described with respect to mobile device 104A.

A base station, such as an enhanced or evolved node B (eNodeB), may provide wireless communication services to communication devices, such as device 104A. While the exemplary communication system 100 of FIG. 1 depicts only three devices users 104A, 104B, 104C any combination of multiple users, devices, servers and the like may be coupled to network equipment 102 in various embodiments. For example, three or more users located in a venue, such as a building, campus, mall area, or other area, and may utilize any number of mobile wireless-enabled computing devices to independently communicate with network equipment 102. Similarly, communication system 100 may include more than one network equipment 102. For example, a plurality of access points or base stations may form an overlapping coverage area where devices may communicate with at least two instances of network equipment 102.

Although communication system 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radio-frequency integrated circuits (RFICs) and combinations of various hardware and logic circuitry for performing at least the functions described herein. In some embodiments, the functional elements of system 100 may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, system 100 may include one or more processors and may be configured with instructions stored on a computer-readable storage device.

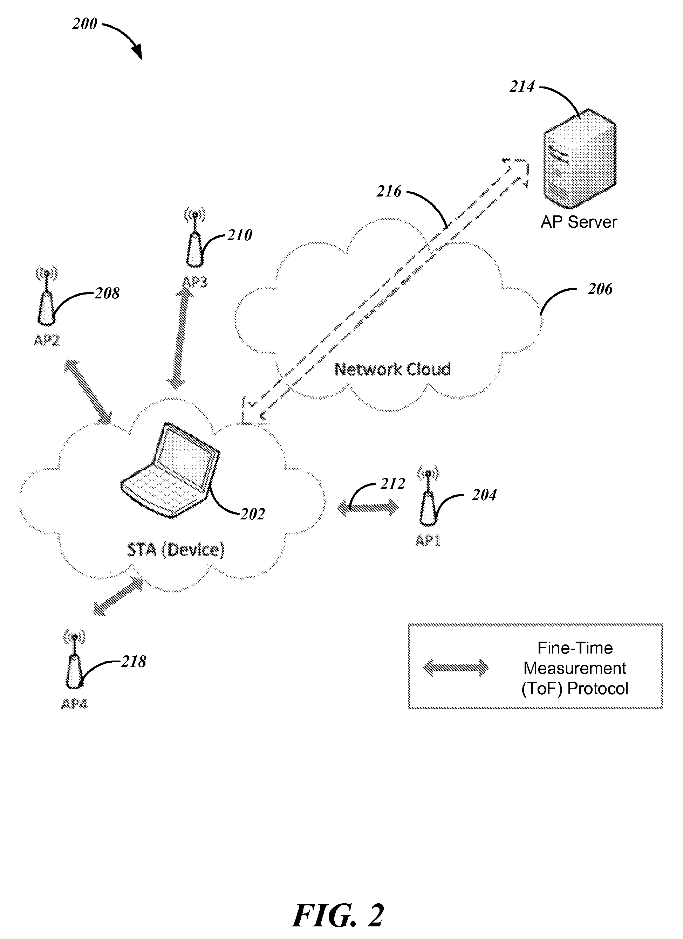

FIG. 2 is a block diagram of an example wireless communication system 200 that may utilize the communication network architecture 100 of FIG. 1. The exemplary communication system 200 may include a device 202 that is capable of wireless communication (e.g., a user equipment (UE) or communication station (STA)). In an example, the device 202 may be a mobile computing device such as a cellular phone, a smartphone, a laptop, a tablet computer, a personal digital assistant or other electronic device capable of wireless communication. A first access point (AP) 204 may, for example, be a base station or a fixed wireless router. The device 202 may establish a communication link 212 with the first access point 204 in order to reach a network 206 such as the Internet. In an example, the device 202 may communicate with an access point server 214 via a connection 216, for example, through the first access point 204 and the network 206. The connection 216 may be unencrypted or, for example, be encrypted and utilize Hyper Text Transfer Protocol Secured (HTTPS) and transport layer security (TLS) to prevent the interception or unauthorized manipulation of data exchanged between the device 202 and the access point server 214.

In an example, a second access point 208 or a third access point 210 may be within range of the device 202. The device 202 may communicate with the first access point 204, the second access point 208 or the third access point 210. The device 202 may request location information regarding one or more of the first access point 204, the second access point 208, the third access point 210, or any other access point 218, from the access point server 214. In response to the location information request, the secure access point locations server 214 may provide the device 202, via connection 216, with the location information corresponding to the requested access point. In an example, the access point server 214 may also provide the device 202 with one or more keys that the device 202 may utilize to securely communicate with the requested access point.

The first access point 204, the second access point 208, and the third access point 210 may all provide timing and/or location information to the device 202 over a secure communication link that may be established using a key, or other security information obtained by the device 202, from the access point server 214. The timing information may include time-of-arrival or time-of-departure data with respect to the TOF protocol exchange that are local to the each access point. The location information may include an updated location of a respective access point.

In an example, device 202 may include an access point (AP) database that includes a representation of the first access point 204, the second access point 208, and the third access point 210. The AP database may be utilized by the device 202 to select the access points that the device 202 will communicate with in order to perform location measurements. In an example, the device 202 may be configured to select the access points with the use of a selection algorithm that is performed in a constant time or with a constant number of operations for any number of elements in the access database, e.g., on the order of one O(1).

In an example, the device 202 may obtain various information regarding individual access points, such as: a BSSID, a location, and/or a set of capabilities (e.g., bandwidth, modulation coding scheme (MCS), ToF support, etc.) in order to select an AP for performing a ToF calculation. Determining an appropriate AP may start with searching for the access points that are estimated to be the closest to the device location. Typically, the closest access points (e.g., an AP with the strongest signal(s) received by a device) have the most influence on the accuracy level of the ultimate location calculation.

At least two issues are present in determining an appropriate AP for performing the ToF calculation. First, it may be useful to sort an AP database stored on the device 202 from the nearest AP to the device (associated or strongest RSSI) to the farthest AP. This sort may generally be estimated as being performed in quadratic time, e.g., O(N * N), or linearithmic time e.g., O(N * log(N)). Second, not all APs may not necessarily be stored or represented in the same coordinate system, so part of the computation complexity may include converting an entire database, or at least portions of the database, to a uniform coordinate system.

These issues may be resolved in a variety of manners. For example, including the location of all access points in a list, such as a linked data structure, where the list includes access points that utilize the same coordinate system, may decrease the time or resources necessary to select an AP from the list. Additionally, each AP may include a link to up to a specified number (N) of other neighboring APs that are the closest to the AP (e.g., within a range where the APs may efficiently or reliably establish a connection).

Various protocols may publish the location of an AP in local coordinates, however, multiple access points in a single venue may be presented in a different coordinates system in some non-ideal circumstances. In an example, all the access points may be stored in a format compatible with a World Geodetic System (WGS), such as the WGS84 coordinate system, with additional information utilized to simplify the location computation.

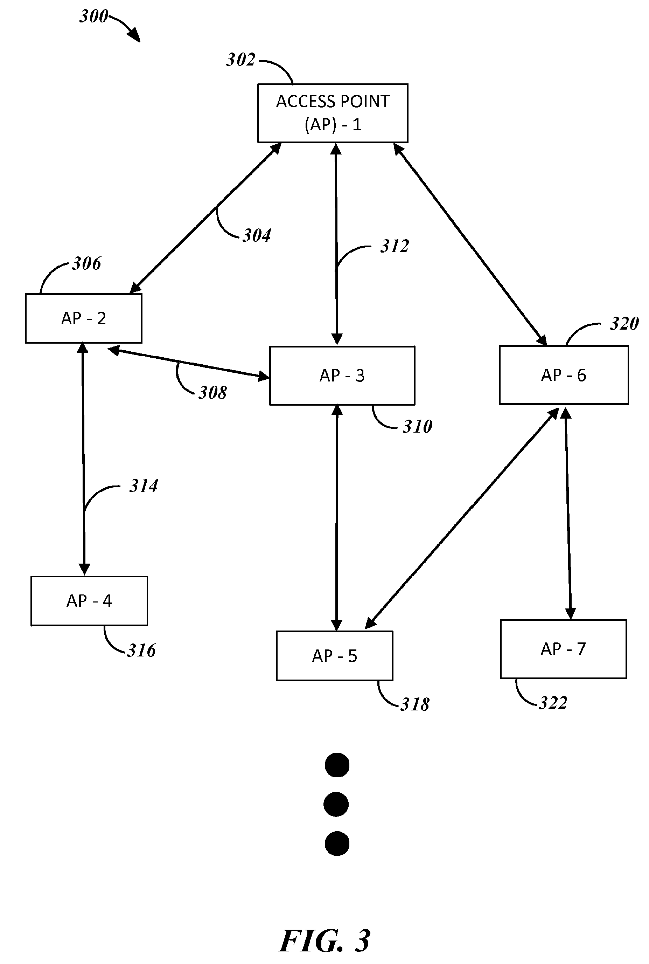

FIG. 3 depicts an example illustration of an access point hierarchy 300, in accordance with some embodiments. Generally, each AP entry in an access point database may include links, pointers, or indexes in an array, to the closest AP's around the AP. For example, an access point 302 may include a first link 304 to a second access point 306. The second access point 306 is a direct neighbor to the access point 302. The second access point 305 may include a second link 308 to a third access point 310. The third access point 310 is a direct neighbor to the second access point 306, and also a direct neighbor to the access point 302 as there is a direct link 312 between the access point 302 and the third access point 310. The first link 304 and the second link 308 may be bi-directional, such that the second access point 306 also includes the first link 304 to the access point 302, and the third access point 310 includes the second link 308 to the second access point 306.

In an example, a fourth access point 316 may form a terminal node such that it is only linked to a single access point, such as, the fourth link 314 between the second access point 306 and the fourth access point 316. The fourth access point 316 and the second access point 306 are direct neighbors, but the fourth access point 316 is not a direct neighbor with the access point 302.

In an example, a fifth access point 318 may form a terminal node that includes links to two or more access points. The fifth access point 318 is a direct neighbor to both the third access point 310 and the sixth access point 320. The example access point hierarchy 300 includes up to three neighbors for each AP, however, additional entries or links are contemplated. Although only seven access points are depicted in access point hierarchy 300 additional access points are contemplated.

In an example AP database, each time a device needs to select the best AP to perform location measurements, the device may sort all the DB according to their associated/strongest AP. However, this sorting operation may cause additional power consumption and creates additional latency for the overall location computation time. By providing the AP database to a device in a list format, where direct neighbors are linked in the list, a network equipment (e.g., access point) may decrease the processing burden on the device during the selection of which Aps the device should use to perform location measurements.

In an example, a device may utilize a "who are my neighbors" approach to eliminate the sorting process. The device may therefore also reduce the power and time needed to perform the selection process significantly, e.g., a linear time savings, up to O(N). In an example, the selection process may be further reduced if the AP list is stored or already sorted by basic service set identification (BSSID). In this scenario the selection process then may be performed in logarithmic time, e.g., within O log(N) time.

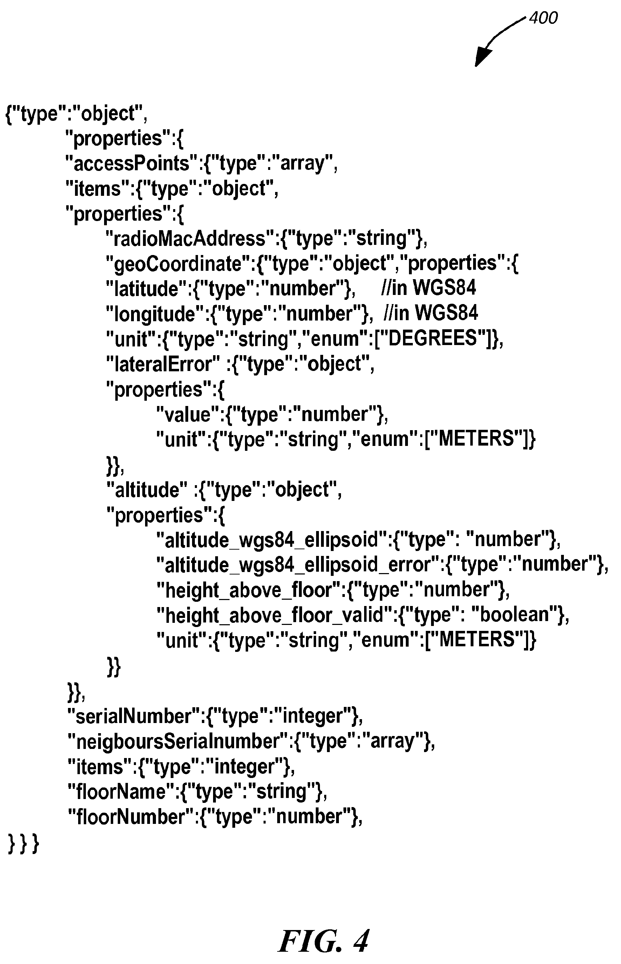

FIG. 4 depicts an example of an access point data structure 400 implemented in JavaScript Object Notation (JSON). In an example, each access point in an access point database may include a plurality of properties such as: a radio media access control (MAC) address that may be stored as a string, a set of geographic (geo) coordinates including a latitude and longitude pair, each in WGS84 notation, a unit type (e.g., degrees, radians, etc.), a lateral error field that may include a value and a unit type (e.g., feet, meters, etc.). The plurality of properties may also include: an altitude object that may include properties such as an altitude WGS84 ellipsoid, an altitude WGS84 ellipsoid error value, a height above floor value, a height above floor Boolean flag, and a unit type (e.g., feet, meters, etc.).

The plurality of properties may also include: a serial number (e.g., an integer value), an array of neighbors serial numbers, an items field, a floor name string, and a floor number value. The properties described herein may be modified to accommodate one or more protocol or navigation standards. Other properties may also be included.

In an example, a data structure may include all the access points with the following location information that may be utilized to establish a uniform coordinate system: latitude in WGS84, longitude in WGS84, lateral error, altitude above ellipsoid in WGS84, altitude above ellipsoid in WGS84 error, and height above a floor.

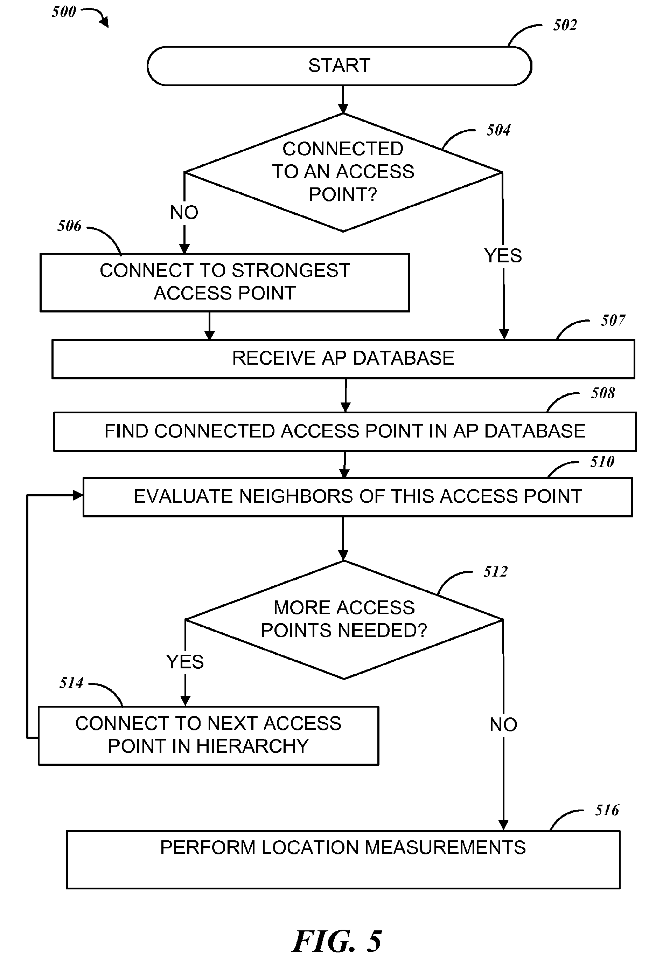

FIG. 5 is a flow diagram illustrating an example access point selection algorithm 500, according to an embodiment. In an example, the selection algorithm 500 may begin, at 502, when a location determination is requested by a device. At 504, the device may check to determine if it is connected to, or associated with, an access point or other network equipment. If the device is not connected to an access point, then, at 506, the device will connect to the strongest access point, e.g., the AP with the strongest radio strength signal indication (RSSI). The access point with the strongest RSSI may typically be interpreted as the access point that is closest to the device.

When the device is connected to an access point, then, at 507, the device may receive a copy of the AP database from the access point. The copy of the AP database may include all of the AP information known to or stored at the access point, or it may be a subset of the AP information. For example, an AP may only provide the device with a list of direct neighbors of the access point, or a list of direct neighbors and also neighbors of its direct neighbors.

At 508, the device will look up the identifier (e.g., BSSID) of the access point in its local copy of the access point database. In an example, the look up may be performed in logarithmic time e.g., within O log(N), where N is the number of entries in the database. At 510 the device may evaluate the neighbors of this access point, e.g., the direct neighbors that are closes to the access point. Neighbors of the access point may be indicated in the access point database by a pointer, vector, or other logical link in the list provided to the device by the access point. In an example, the evaluation may be performed in a constant, e.g., O(1), time.

At 512, the device may check to determine if additional information is needed from additional access points (e.g., neighbors of the direct neighbors of the access point) to successfully or accurately perform a ToF measurement. If more access points are needed, then, at 514, the device may connect to the next access point (e.g., a direct neighbor of the access point) in the AP hierarchy stored in the local access point database. If no additional access points are needed, then at 516, the device may perform any distance measurements according to any appropriate location protocol, such as ToF or RSSI techniques.

Though arranged serially in the example of FIG. 5, other examples may reorder the operations, omit one or more operations, and/or execute two or more operations in parallel using multiple processors or a single processor organized as two or more virtual machines or sub-processors. Moreover, still other examples may implement the operations as one or more specific interconnected hardware or integrated circuit modules with related control and data signals communicated between and through the modules. Thus, any process flow is applicable to software, firmware, hardware, and hybrid implementations.

In some embodiments, a receiver implementing the access point database may be part of a portable wireless communication device, such as a personal digital assistant (PDA), a laptop or portable computer with wireless communication capability, a web tablet, a wireless telephone, a wireless headset, a pager, an instant messaging device, a digital camera, an access point, a television, a medical device (e.g., a heart rate monitor, a blood pressure monitor, etc.), or other device that may receive and/or transmit information wirelessly.

In some embodiments, a mobile device may include one or more of a keyboard, a display, a non-volatile memory port, multiple antennas, a graphics processor, an application processor, speakers, and other mobile device elements. The display may be an LCD screen including a touch screen.

Although systems discussed herein may have several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radio-frequency integrated circuits (RFICs) and combinations of various hardware and logic circuitry for performing at least the functions described herein. In some embodiments, the functional elements of system may refer to one or more processes operating on one or more processing elements.

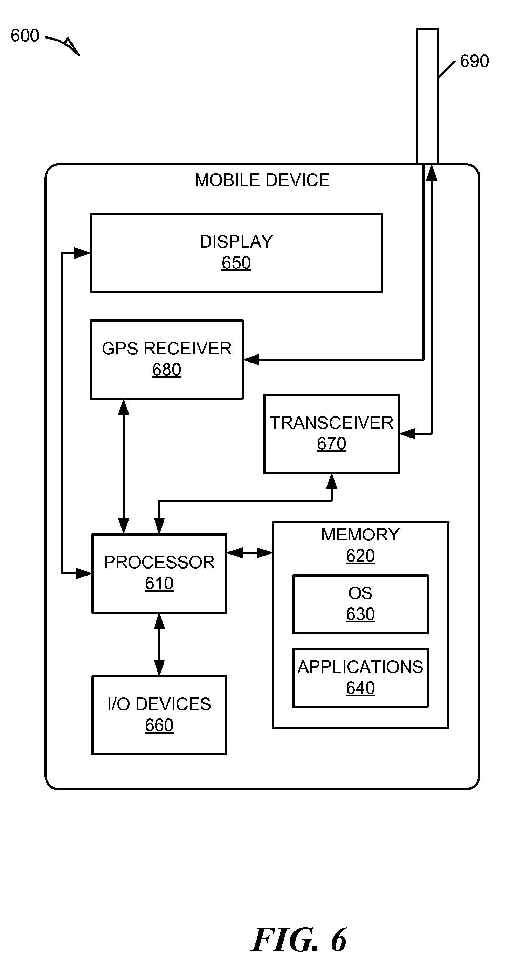

FIG. 6 is a block diagram illustrating a mobile device 600, upon which any one or more of the techniques (e.g., methodologies) discussed herein may be performed. The mobile device 600 may include a processor 610. The processor 610 may be any of a variety of different types of commercially available processors suitable for mobile devices, for example, an XScale architecture microprocessor, a Microprocessor without Interlocked Pipeline Stages (MIPS) architecture processor, or another type of processor. A memory 620, such as a Random Access Memory (RAM), a Flash memory, or other type of memory, is typically accessible to the processor 610. The memory 620 may be adapted to store an operating system (OS) 630, as well as application programs 640. The OS 630 or application programs 640 may include instructions stored on a computer readable medium (e.g., memory 620) that may cause the processor 610 of the mobile device 600 to perform any one or more of the techniques discussed herein. The processor 610 may be coupled, either directly or via appropriate intermediary hardware, to a display 650 and to one or more input/output (I/O) devices 660, such as a keypad, a touch panel sensor, a microphone, etc. Similarly, in an example embodiment, the processor 610 may be coupled to a transceiver 670 that interfaces with an antenna 690. The transceiver 670 may be configured to both transmit and receive cellular network signals, wireless data signals, or other types of signals via the antenna 690, depending on the nature of the mobile device 600. Further, in some configurations, a GPS receiver 680 may also make use of the antenna 690 to receive GPS signals.

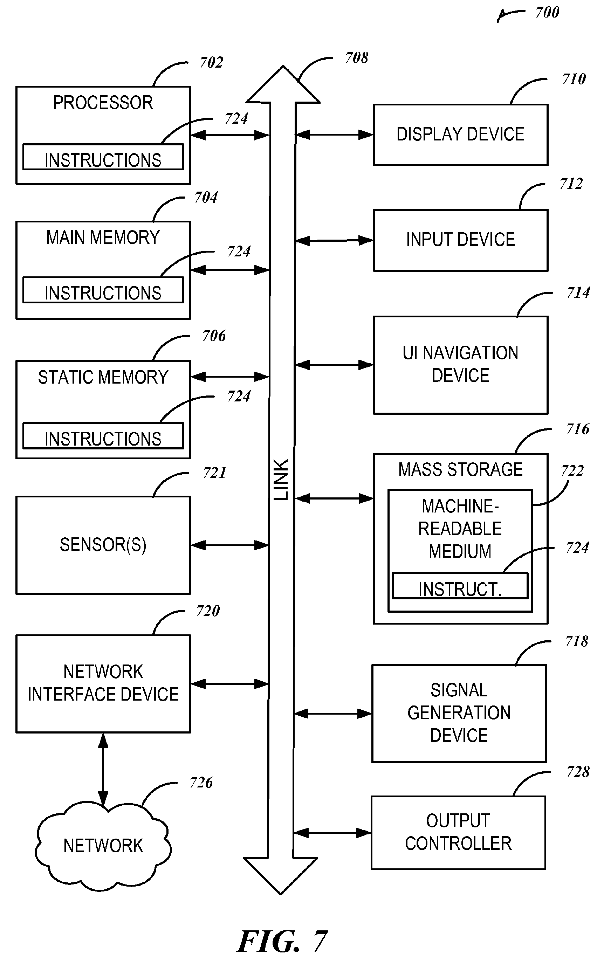

FIGURE 7 illustrates a block diagram of an example machine 700 upon which any one or more of the techniques (e.g., methodologies) discussed herein may be performed. In alternative embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environment. The machine 700 may be a personal computer (PC), a tablet PC, a Personal Digital Assistant (PDA), a mobile telephone, a web appliance, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside (1) on a non-transitory machine-readable medium or (2) in a transmission signal. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 700 may include a hardware processor 702 (e.g., a processing unit, a graphics processing unit (GPU), a hardware processor core, or any combination thereof), a main memory 704, and a static memory 706, some or all of which may communicate with each other via a link 708 (e.g., a bus, link, interconnect, or the like). The machine 700 may further include a display device 710, an input device 712 (e.g., a keyboard), and a user interface (UI) navigation device 714 (e.g., a mouse). In an example, the display device 710, input device 712, and UI navigation device 714 may be a touch screen display. The machine 700 may additionally include a mass storage (e.g., drive unit) 716, a signal generation device 718 (e.g., a speaker), a network interface device 720, and one or more sensors 721, such as a global positioning system (GPS) sensor, camera, video recorder, compass, accelerometer, or other sensor. The machine 700 may include an output controller 728, such as a serial (e.g., universal serial bus (USB), parallel, or other wired or wireless (e.g., infrared (IR)) connection to communicate or control one or more peripheral devices (e.g., a printer, card reader, etc.).

The mass storage 716 may include a machine-readable medium 722 on which is stored one or more sets of data structures or instructions 724 (e.g., software) embodying or utilized by any one or more of the techniques or functions described herein. The instructions 724 may also reside, completely or at least partially, within the main memory 704, within static memory 706, or within the hardware processor 702 during execution thereof by the machine 700. In an example, one or any combination of the hardware processor 702, the main memory 704, the static memory 706, or the mass storage 716 may constitute machine-readable media.

While the machine-readable medium 722 is illustrated as a single medium, the term "machine readable medium" may include a single medium or multiple media (e.g., a centralized or distributed database, and/or associated caches and servers) that configured to store the one or more instructions 724.

The term "machine-readable medium" may include any tangible medium that is capable of storing, encoding, or carrying instructions for execution by the machine 700 and that cause the machine 700 to perform any one or more of the techniques of the present disclosure, or that is capable of storing, encoding or carrying data structures used by or associated with such instructions. Non-limiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 724 may further be transmitted or received over a communications network 726 using a transmission medium via the network interface device 720 utilizing any one of a number of transfer protocols (e.g., frame relay, internet protocol (IP), transmission control protocol (TCP), user datagram protocol (UDP), hypertext transfer protocol (HTTP), etc.). The term "transmission medium" shall be taken to include any intangible medium that is capable of storing, encoding or carrying instructions for execution by the machine 700, and includes digital or analog communications signals or other intangible medium to facilitate communication of such software.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

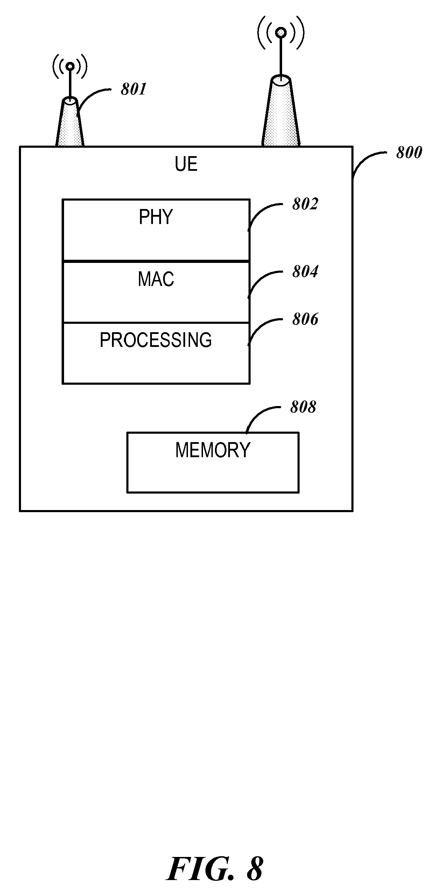

FIGURE 8 illustrates a functional block diagram of an example machine 800 (e.g., a UE) in accordance with some embodiments. The UE 800 may include physical layer circuitry 802 for transmitting and receiving signals to and from eNBs using one or more antennas 801. UE 800 may also include processing circuitry 806 that may include, among other things a channel estimator. UE 800 may also include a memory 808. The processing circuitry may be configured to determine several different feedback values discussed below for transmission to the eNB. The processing circuitry may also include a media access control (MAC) layer 804.

In some embodiments, the UE 800 may include one or more of a keyboard, a display, a non-volatile memory port, multiple antennas, a graphics processor, an application processor, speakers, and other mobile device elements. The display may be an LCD screen including a touch screen.

The one or more antennas 801 utilized by the UE 800 may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated to take advantage of spatial diversity and the different channel characteristics that may result between each of antennas and the antennas of a transmitting station. In some MIMO embodiments, the antennas may be separated by up to 1/10 of a wavelength or more.

Although the UE 800 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage medium, which may be read and executed by at least one processor to perform the operations described herein. A computer-readable storage medium may include any non-transitory mechanism for storing information in a form readable by a machine (e.g., a computer). For example, a computer-readable storage medium may include read-only memory (ROM), random-access memory (RAM), magnetic disk storage media, optical storage media, flash-memory devices, and other storage devices and media. In these embodiments, one or more processors of the UE 800 may be configured with the instructions to perform the operations described herein.

In some embodiments, the UE 800 may be configured to receive OFDM communication signals over a multicarrier communication channel in accordance with an OFDMA communication technique. The OFDM signals may comprise a plurality of orthogonal subcarriers. In some broadband multicarrier embodiments, eNBs (including macro eNB and pico eNBs) may be part of a broadband wireless access (BWA) network communication network, such as a Worldwide Interoperability for Microwave Access (WiMAX) communication network or a 3rd Generation Partnership Project (3GPP) Universal Terrestrial Radio Access Network (UTRAN) Long-Term-Evolution (LTE) or a Long-Term-Evolution (LTE) communication network, although the scope of the inventive subject matter described herein is not limited in this respect. In these broadband multicarrier embodiments, the UE 800 and the eNBs may be configured to communicate in accordance with an orthogonal frequency division multiple access (OFDMA) technique. The UTRAN LTE standards include the 3rd Generation Partnership Project (3GPP) standards for UTRAN-LTE, release 8, March 2008, and release 10, December 2010, including variations and evolutions thereof.

In some LTE embodiments, the basic unit of the wireless resource is the Physical Resource Block (PRB). The PRB may comprise 12 sub-carriers in the frequency domain x 0.5 ms in the time domain. The PRBs may be allocated in pairs (in the time domain). In these embodiments, the PRB may comprise a plurality of resource elements (REs). A RE may comprise one subcarrier x one symbol.

Two types of reference signals may be transmitted by an eNB including demodulation reference signals (DM-RS), channel state information reference signals (CIS-RS) and/or a common reference signal (CRS). The DM-RS may be used by the UE for data demodulation. The reference signals may be transmitted in predetermined PRBs.

In some embodiments, the OFDMA technique may be either a frequency domain duplexing (FDD) technique that uses different uplink and downlink spectrum or a time-domain duplexing (TDD) technique that uses the same spectrum for uplink and downlink.

In some other embodiments, the UE 800 and the eNBs may be configured to communicate signals that were transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, the UE 800 may be part of a portable wireless communication device, such as a PDA, a laptop or portable computer with wireless communication capability, a web tablet, a wireless telephone, a wireless headset, a pager, an instant messaging device, a digital camera, an access point, a television, a medical device (e.g., a heart rate monitor, a blood pressure monitor, etc.), or other device that may receive and/or transmit information wirelessly.

In some LTE embodiments, the UE 800 may calculate several different feedback values which may be used to perform channel adaption for closed-loop spatial multiplexing transmission mode. These feedback values may include a channel-quality indicator (CQI), a rank indicator (RI) and a precoding matrix indicator (PMI). By the CQI, the transmitter selects one of several modulation alphabets and code rate combinations. The RI informs the transmitter about the number of useful transmission layers for the current MIMO channel, and the PMI indicates the codebook index of the precoding matrix (depending on the number of transmit antennas) that is applied at the transmitter. The code rate used by the eNB may be based on the CQI. The PMI may be a vector that is calculated by the UE and reported to the eNB. In some embodiments, the UE may transmit a physical uplink control channel (PUCCH) of format 2, 2a or 2b containing the CQI/PMI or RI.

In these embodiments, the CQI may be an indication of the downlink mobile radio channel quality as experienced by the UE 800. The CQI allows the UE 800 to propose to an eNB an optimum modulation scheme and coding rate to use for a given radio link quality so that the resulting transport block error rate would not exceed a certain value, such as 10%. In some embodiments, the UE may report a wideband CQI value which refers to the channel quality of the system bandwidth. The UE may also report a sub-band CQI value per sub-band of a certain number of resource blocks which may be configured by higher layers. The full set of sub-bands may cover the system bandwidth. In case of spatial multiplexing, a CQI per code word may be reported.

In some embodiments, the PMI may indicate an optimum precoding matrix to be used by the eNB for a given radio condition. The PMI value refers to the codebook table. The network configures the number of resource blocks that are represented by a PMI report. In some embodiments, to cover the system bandwidth, multiple PMI reports may be provided. PMI reports may also be provided for closed loop spatial multiplexing, multi-user MIMO and closed-loop rank 1 precoding MIMO modes.

In some cooperating multipoint (CoMP) embodiments, the network may be configured for joint transmissions to a UE in which two or more cooperating/coordinating points, such as remote-radio heads (RRHs) transmit jointly. In these embodiments, the joint transmissions may be MIMO transmissions and the cooperating points are configured to perform joint beamforming.

The example embodiments discussed herein may be utilized by wireless network access providers of all types including, but not limited to, mobile broadband providers looking to increase cellular offload ratios for cost-avoidance and performance gains, fixed broadband providers looking to extend their coverage footprint outside of customers' homes or businesses, wireless network access providers looking to monetize access networks via access consumers or venue owners, public venues looking to provide wireless network (e.g., Internet) access, or digital services (e.g. location services, advertisements, entertainment, etc.) over a wireless network, and business, educational or nonprofit enterprises that desire to simplify guest Internet access or Bring- Your-Own-Device (BYOD) access.

The following section of the description consists of numbered paragraphs simply providing statements of the invention already described herein. The numbered paragraphs in this section are not claims. The claims are set forth below in the later section headed "claims".
1. A network equipment apparatus comprising: processing circuitry; and
   an access point database stored in a memory coupled to the processing circuitry, the access point database including: a list of access points where each access point in the list corresponds to an instance of an access point data structure and the instances of neighboring access points are linked, the access point data structure having: an access point identifier, a geographic coordinate corresponding to a location of the access point, an error value associated with the geographic coordinate, and a description of capabilities of the access point;
   wherein the processing circuitry is configured to: establish a network connection with a communication station (STA); access the access point database; and
   transmit at least a portion of the list of neighboring access points to the STA.
2. The network equipment apparatus of clause 1, wherein, the access point identifier includes a media access control (MAC) address; the geographic coordinate includes a latitude, a longitude, a coordinate unit type, a height above a floor value, and a height unit type; and the error value includes a value and a unit type.
3. The network equipment apparatus of clauses 1 or 2, wherein the list of neighboring access points includes a first set of access points that are proximate to the network equipment, and a second set of access points that are proximate to the access points in the first set of access points; and the portion of the list of neighboring access points includes the first set of access points and the second set of access points.
4. The network equipment apparatus of clause 3, wherein, the second set of access points are not part of the first set of access points.
5. The network equipment apparatus of clauses 1 or 2, wherein the processing circuitry is further configured to establish a wireless connection between the network equipment and the STA at least in part by performing wireless communications in accordance with a standard from:
   a standard from an IEEE 802.11 standards family, or a standard from an IEEE 802.16 standards family.
6. A non-transitory machine-readable medium having machine-readable code stored thereon for causing a network equipment to perform operations comprising: establishing a network connection with a communication station (STA); accessing an access point database including the access point information and links between neighboring network equipment; sending the access point information to the STA, the access point information including a list of access points where each access point in the list corresponds to an instance of an access point data structure and the instances of neighboring access points are linked, the access point data structure having: an access point identifier, a geographic coordinate corresponding to a location of the access point, an error value associated with the geographic coordinate, and a description of capabilities of the access point.
7. The non-transitory machine-readable medium of clause 6, wherein, the access point identifier includes a media access control (MAC) address; the geographic coordinate includes a latitude, a longitude, a coordinate unit type, a height above a floor value, and a height unit type; and the error value includes a value and a unit type.
8. The non-transitory machine-readable medium of clauses 6 or 7, the operations further comprising: updating the access point database to include additional access point information received from a second network equipment.
9. The non-transitory machine-readable medium of clauses 6 or 7, the operations further comprising: performing a range measurement with the STA.
10. The non-transitory machine-readable medium of clauses 6 or 7, wherein the network connection between the network equipment and the STA is performed at least in part by performing wireless communications in accordance with a standard from: a 3 GPP Long Term Evolution or Long Term Evolution-Advanced standards family, a standard from an IEEE 802.11 standards family, a standard from an IEEE 802.16 standards family, or a standard from a Bluetooth Special Interest Group standards family.
11. An access point data structure stored on a tangible computer readable medium, the data structure comprising: an access point identifier; a geographic coordinate corresponding to a location of the access point; an error value associated with the geographic coordinate; a description of capabilities of the access point; and a list of access point neighbors.
12. The access point data structure of clause 11, wherein, the access point identifier includes a media access control (MAC) address; the geographic coordinate includes a latitude, a longitude, a coordinate unit type, a height above a floor value, and a height unit type; and the error value includes a value and a unit type.
13. A communication station (STA) comprising: processing circuitry; a memory coupled to the processing circuitry; an antenna; a transceiver coupled to the processing circuitry and the antenna; wherein the processing circuitry is configured to: establish a network connection with a first network equipment; receive access point information from the first network equipment, the access point information including links between neighboring network equipment; select a second network equipment based on access point information in the access point database, the selection being based at least in part on a link between the first network equipment and the second network equipment; establish a second network connection with the second network equipment; perform a range measurement with the second network equipment; and determine a location of the STA based on the range measurement.
14. The STA of clause 13, wherein the processing circuitry is further configured to:
   update the access point database to include additional access point information from the second network equipment.
15. The STA of clauses 13 or 14, wherein, the access point information includes: an access point identifier, location data corresponding to the network equipment, and altitude, and neighbor access point data.
16. The STA of clauses 13 or 14, wherein the processing circuitry is further configured to: select, in response to a determination that an additional network equipment is needed to perform the range measurement, a third network equipment based on access point information in the access point database, the selection being based at least in part on a link between the third network equipment, and the first network equipment or the second network equipment; establish the third network connection with the third network equipment; and perform a range measurement with the third network equipment.
17. The STA of clause 16, wherein the determination that the additional network equipment is needed to perform the range measurement is based at least in part on a location of the second network connection.
18. The STA of clauses 13 or 14, wherein the processing circuitry is further configured to establish a wireless connection between the transceiver and the STA at least in part by performing wireless communications in accordance with a standard from: a standard from an IEEE 802.11 standards family, or a standard from an IEEE 802.16 standards family.
19. A method for providing location data to a communication station (STA) comprising:
   establishing a network connection with the STA; accessing an access point database including the access point information and links between neighboring network equipment; sending the access point information to the STA, the access point information including a list of access points where each access point in the list corresponds to an instance of an access point data structure and the instances of neighboring access points are linked, the access point data structure having: an access point identifier, a geographic coordinate corresponding to a location of the access point, an error value associated with the geographic coordinate, and a description of capabilities of the access point.
20. The method of clause 19, wherein, the access point identifier includes a media access control (MAC) address; the geographic coordinate includes a latitude, a longitude, a coordinate unit type, a height above a floor value, and a height unit type; and the error value includes a value and a unit type.
21. The method of clauses 19 or 20, the operations further comprising: updating the access point database to include additional access point information received from a second network equipment.
22. The method of clauses 19 or 20, the operations further comprising: performing a range measurement with the STA.
23. The method of clauses 19 or 20, wherein the network connection between the network equipment and the STA is performed at least in part by performing wireless communications in accordance with a standard from: a 3GPP Long Term Evolution or Long Term Evolution- Advanced standards family, a standard from an IEEE 802.1 1 standards family, a standard from an IEEE 802.16 standards family, or a standard from a Bluetooth Special Interest Group standards family.

## Claims

1. An apparatus of a network equipment, the apparatus comprising:
memory; and, processing circuitry, the processing circuitry configured to:
access a request from a station (STA) for a neighbor list, the STA associated with a first access point, the first access point in communication with the network equipment;
determine a neighbor list based on a location of the first access point compared with locations of second access points, the second access points in communication with the network equipment, wherein the neighbor list comprises one or more of the second access points, and wherein the neighbor list comprises, for each of the second access points, an indication of a basic service set identification (BSSID), a location, and an operating bandwidth; and
cause the network equipment to send the neighbor list to the first access point.

2. The apparatus of claim 1, wherein the neighbor list comprises direct neighbors of the STA.

3. The apparatus of claim 2, wherein the neighbor list comprises, for each of the one or more of the second access points, a geographic coordinate corresponding to a location of a corresponding one of the second access points.

4. The apparatus of claim 2, wherein the neighbor list comprises, for each of the one or more of the second access points, capabilities of the corresponding second access point.

5. The apparatus of claim 1, wherein the neighbor list comprises for each of the one or more of the second access points a floor number value.

6. The apparatus of claim 1, wherein the first access point and the second access points are part of a same basic service set (BSS).

7. The apparatus of claim 1, wherein the processing circuitry is configured to:
configure the network equipment to send the neighbor list to the STA via the first access point.

8. The apparatus of claim 1, wherein the processing circuitry is configured to:
determine the neighbor list based on an estimated closeness of the second access points to the STA.

9. The apparatus of claim 1, wherein the processing circuitry is configured to:
determine the neighbor list based on floor number values of the first access point and the second access points.

10. The apparatus of claim 1, wherein the first access point is authenticated with the network equipment.

11. The apparatus of claim 1, further comprising transceiver circuitry coupled to the processing circuitry; and, one or more antennas coupled to the transceiver circuitry.

12. A non-transitory computer-readable storage medium that stores instructions for execution by one or more processors, the instructions to configure the one or more processors to cause a network equipment to:
determine a neighbor list based on a location of a first access point compared with locations of second access points, the second access points in communication with the network equipment, wherein the neighbor list comprises one or more of the second access points, and wherein the neighbor list comprises, for each of the second access points, an indication of a basic service set identification (BSSID), a location, and an operating bandwidth; and
send the neighbor list to a station (STA) via the first access point.

13. The non-transitory computer-readable storage medium of claim 12, wherein the instructions configure the one or more processors to cause the network equipment to:
decode a request from the STA for a neighbor list, the STA associated with a first access point, the first access point associated with the network equipment.

14. A method performed by a station, the method comprising:
accessing a request from a station (STA) for a neighbor list, the STA associated with a first access point, the first access point in communication with network equipment;
determining a neighbor list based on a location of the first access point compared with locations of second access points, the second access points in communication with the network equipment, wherein the neighbor list comprises one or more of the second access points, and wherein the neighbor list comprises, for each of the second access points, an indication of a basic service set identification (BSSID), a location, and an operating bandwidth; and
causing the network equipment to send the neighbor list to the first access point.

15. The method of claim 14, wherein the neighbor list comprises direct neighbors of the STA.
